# EUROPEAN PATENT SPECIFICATION

(11) **EP 4 590 463 B1**
(45) Date of publication and mention of the grant of the patent: **04.11.2026**
(21) Application number: 23786322.0
(22) Date of filing: 18.09.2023
(51) Int. Cl.: B25J 9/00

(54) **EXOSKELETON FOR SUPPORTING THE BACK OF A USER**
EXOSKELETT ZUR UNTERSTÜTZUNG DES RÜCKENS EINES BENUTZERS
EXOSQUELETTE POUR SUPPORTER LE DOS D'UN UTILISATEUR

(30) Priority: 20.09.2022 IT 202200019272
(43) Date of publication of application: 30.07.2025
(73) Proprietor: Fondazione Istituto Italiano di Tecnologia, 16163 Genova (GE) (IT)
(72) Inventor: DI NATALI, Christian, 16163 Genova (GE) (IT); POLIERO, Tommaso, 16163 Genova (GE) (IT); SPOSITO, Matteo, 16163 Genova (GE) (IT)
(74) Representative: Bottino, Giovanni
(86) International application number: PCT/IB2023/059222
(87) International publication number: WO 2024/062364

(56) References cited:
- US-A1- 2019 358 807
- TOXIRI STEFANO ET AL: "A wearable device for reducing spinal loads during lifting tasks: Biomechanics and design concepts", 2015 IEEE INTERNATIONAL CONFERENCE ON ROBOTICS AND BIOMIMETICS (ROBIO), IEEE, 6 December 2015 (2015-12-06), pages 2295 - 2300, XP032873394, DOI: 10.1109/ROBIO.2015.7419116
- TOXIRI STEFANO ET AL: "Using parallel elasticity in back-support exoskeletons: a study on energy consumption during industrial lifting tasks", 2019 WEARABLE ROBOTICS ASSOCIATION CONFERENCE (WEARRACON), IEEE, 25 March 2019 (2019-03-25), pages 1 - 6, XP033554871, DOI: 10.1109/WEARRACON.2019.8719404
- POLIERO TOMMASO ET AL: "Assessment of an On-board Classifier for Activity Recognition on an Active Back-Support Exoskeleton", 2019 IEEE 16TH INTERNATIONAL CONFERENCE ON REHABILITATION ROBOTICS (ICORR), IEEE, 24 June 2019 (2019-06-24), pages 559 - 564, XP033583314, DOI: 10.1109/ICORR.2019.8779519
- MASOOD JAWAD ET AL: "Mechanical design and analysis of light weight hip joint Parallel Elastic Actuator for industrial exoskeleton", 2016 6TH IEEE INTERNATIONAL CONFERENCE ON BIOMEDICAL ROBOTICS AND BIOMECHATRONICS (BIOROB), IEEE, 26 June 2016 (2016-06-26), pages 631 - 636, XP032930454, DOI: 10.1109/BIOROB.2016.7523696

## Description

The object of the present invention is an exoskeleton configured to be worn by a user, comprising a device for anchoring device to the waist of the user, a device for anchoring to the torso of the user and a device for anchoring to the thighs of the user.

The waist anchoring device is connected to the torso anchoring device through an upper frame and to the user's thigh anchoring device through a lower frame.

There is also at least one actuation unit configured to generate an assistive torque. The assistive torque generated is therefore aimed at helping the user in executing movements, favouring the movement between the upper frame and the lower frame.

In particular, the present invention relates to an exoskeleton in accordance with the preamble of the independent claim.

What was just described corresponds to a configuration of exoskeletons aimed at reducing the load on the back (BSE - Back Support Exoskeleton) and, consequently, on the spine of a user, during activities of lifting and moving loads.

Low back pain and musculoskeletal injuries are serious problems for workers subjected to physical workloads and manual material handling activities.

Every year, more than 40% of workers in the EU suffer from low back pain due to the excessive exertion of manual handling activities.

The workers are subjected to physical workloads due to the need to manually handle heavy materials, packages or the like, assuming incongruous postures and performing repetitive movements which cause musculoskeletal injuries.

In order to prevent musculoskeletal pain, such as back pain or the like, different intervention solutions have been evaluated, including instructing and educating workers, changing the workplace, providing training sessions, introducing automation, etc.

However, as many of the solutions adopted are impractical, expensive and require the necessary educational infrastructure, new approaches to intervention such as wearable assistive devices have been widely explored in the last ten years.

The use of exoskeletons is one of the possible solutions for managing labour-intensive activities.

The application of an exoskeleton with respect to any type of automation system has particularly advantageous aspects in dynamic environments, where the activities to be performed necessarily require human intervention, unlike environments where the activities are static and repetitive, perfect for automation systems.

Therefore, spinal assistive exoskeletons have been developed in the background art to support the spine and decrease the load thereon.

Since an exoskeleton is a wearable robot which interacts with the user, providing forces through specific anchoring points, an adequate mechanical coupling between the exoskeleton and the wearer is critical for maximizing the benefit thereof and effectively and comfortably transmitting forces to the user.

The exoskeletons which attenuate back injuries are commonly referred to as Back Support Exoskeletons (BSEs).

In the literature, BSEs have demonstrated their ability to reduce musculoskeletal disorders by applying forces to the trunk and thighs of users.

In fact, thanks to these forces, the lumbar muscles need to activate less and, therefore, are less subject to potential injury.

However, it should be emphasized that, if the exoskeleton is not worn, properly fixed to the user's body and properly used by the user, all performance is lost.

It is possible to find many ways to anchor a back support exoskeleton to the back of the worker's body in the background art. Different choices are more effective than others or can generate different levels of comfort for the user and, therefore, influence the acceptability thereof.

An example of an exoskeleton known in the art is discussed in US2019/358807, which discloses an assistive device including a component worn on the body around the side of a user, a component worn on each thigh of the user, a torque generating unit having an actuator configured to generate an assistive torque, a control unit arranged above the user's hip. The control unit houses the torque generating unit and a controller configured to control the torque generating unit, and a power transmission unit configured to transmit the assistive torque generated in the control unit to the component placed on the thigh. The assistive device reduces the load on the user's lower back by assisting the user with a movement of each thigh with respect to the lower back.

Another solution is disclosed in the publication Toxiri Stefano et al. "A Wearable Device for Reducing Spinal Loads during Lifting Tasks: Biomechanics and Design Concepts" 2015 IEEE International Conference on Robotics and Biomimetics (Robio), IEEE, 6 December 2015.

Such a publication analyses and designs the concept of a wearable assistive device to reduce loads on the spine during lifting activities. A simplified model is used to compare the effects of two possible device configurations: the application of a force (a) parallel and (b) perpendicular to the spine. The model suggests that the perpendicular configuration (b) is preferable to (a). A subsequent numerical analysis suggests that the aid substantially reduces spinal compression. The publication also discusses the design of a hardware prototype, which allows the operator to move mostly unhindered during the execution of lifting tasks.

In the study of a correct anchoring to the user's body, different factors and components of the exoskeleton must generally be considered, such as:
Rigid frame, mainly used to connect the elements which transfer forces from the users' thighs to the upper part of the back;
Straps for fixing to the thighs (commonly known as "leg loops"), responsible for anchoring the exoskeleton to the users' thighs and for the correct transmission of forces;
Means for fixing to the torso (vest), responsible for anchoring the exoskeleton to the user's torso and for the correct transmission of forces;
Lumbar belt, used to firmly fix the exoskeleton to the users' body;
Lumbar cushion, used to improve the comfort of the exoskeleton during normal use and during the transmission of forces;
Buttock belt, used to dissipate the reaction forces of the exoskeleton on the users' body during the forward flexion of the user's torso (a large change in the shape of the user's back is observed during the forward flexion of the torso, which "stretches", causing an increase in the relative distance between the vest fixing means and the position of the lumbar belt) and during the transmission of forces. This component provides stability to the exoskeleton on the user's pelvis. Since the parts of the exoskeleton connected to the different anatomical districts tend to move upwards during use, it the exoskeleton may inevitably and suddenly move away from the ideal position, i.e., when the exoskeleton is firmly anchored to the pelvic area. Therefore, once the device is out of the ideal position, it does not function efficiently and is not capable of effectively transmitting assistive forces to the user;
Thigh straps, i.e., vertical/elastic straps which connect the lumbar belt to the straps for fixing to the thighs. This solution is twofold: it prevents the downward movement of the straps and mitigates the problem of upward movement of the lumbar belt. The straps for fixing to the thighs can be used in accordance with the buttock belt or stand-alone. However, they tend to mitigate the problem of upward belt migration during normal use of the exoskeleton, similar to the buttock belt, but with less effectiveness. Over time these thigh straps tend to loosen, losing effectiveness, but on the other hand, they are not prone to sudden breakage.

The exoskeletons can be classified, based on their actuation, as active or passive exoskeletons. Active exoskeletons are driven by electric motors, pneumatic muscles or hydraulic actuators, while passive exoskeletons adopt different mechanisms, such as metal or gas springs, elastic elements, etc. The choice of the type of actuation must be defined based on the specific use of the exoskeletons. Passive exoskeletons are more appropriate for tasks which require relatively little assistance and less dynamic activities. In contrast, dynamic movement and/or heavier loads require the use of more complex active exoskeletons.

A further classification of BSEs distinguishes them into rigid exoskeletons, which use modular frames consisting of rigid bars for the transmission of forces to the anchoring points, and soft exoskeletons, which are based on flexible (generally textile) structures only.

In the context of rigid exoskeletons, the positioning of the assistive joints with respect to the user's body plays a crucial role, since the misalignment between the assistive joints and the corresponding anatomical structures causes the onset of unwanted phenomena which can compromise the user's perceived comfort. Therefore, depending on how the actuators are connected to the human body, it is necessary to introduce a compensation mechanism for coupling the users' movements with the displacements of the exoskeleton, i.e., the vertical displacements of the lumbar belt and the other anchoring systems to the user's body. In fact, the continuous undesired movements of the anchoring systems can cause redness and abrasion of the user's skin, greatly reducing comfort.

As anticipated, a possible solution, known in the background art, is given by the introduction of a buttock belt.

However, this is not an optimal solution to the problem, as the buttock belt tends to limit the user's movements, greatly reducing the comfort of the exoskeleton and its acceptability by the user.

There is therefore an unmet need by the back support exoskeletons known in the background art, to make a support device for the back of workers capable of improving the stability of the exoskeleton, avoiding slipping of the anchoring components of the exoskeleton along the user's back, but which, at the same time, does not require the use of components, or kinematic compensation mechanisms, aimed at compensating the movements of the parts of the exoskeleton, which cause the movement from the ideal working position of the exoskeleton.

Furthermore, the exoskeletons known in the background art cause limitations to the movements of the lower limbs of the users on the frontal plane (abduction-adduction movements of the hip) due to the interference generated by the encumbrance of the assistive joints positioned at the users' hips.

The present invention achieves the above objects by making an exoskeleton according to the preamble and the characterizing part of the independent claim.

Preferably, the exoskeleton object of the present invention provides two actuation groups, positioned, in the worn condition of the exoskeleton, at the user's hips, at a height corresponding to that of the user's iliac crests.

As will be apparent from the following disclosure, the exoskeleton object of the present invention does not require the adoption of specific kinematic compensation methods. In fact, especially thanks to the precise positioning of the anchoring devices and the configuration of the frame, the stability on the user's back and the comfort of the exoskeleton are significantly improved, without the need to include further kinematic compensation solutions.

As will be apparent from the illustration of some exemplary embodiments, the exoskeleton of the present invention provides an optimal adhesion between the user and the exoskeleton for improved comfort, force transmission efficiency, device performance and user experience.

Furthermore, as will be apparent from the following disclosure, the exoskeleton object of the present invention makes it possible to continuously adjust the sizes of the exoskeleton, and thus the adaptability of the exoskeleton to different user body types, by means of the use of a frame comprising a first ball joint positioned at the user's shoulder blades and connected to two frame branches, which extend laterally with respect to the user's spine and in the direction of the device for anchoring to the user's waist.

Each branch comprises a pair of rotational joints, of which an upper joint and a lower joint, connected to each other by a first rigid bar and arranged with the rotation axes thereof perpendicular to the front plane of the user and an actuation unit connected with a second lever to the lower rotational joint.

Furthermore, the actuation unit comprises at least a third rotational joint connected to the waist anchoring device and arranged with the rotation axis thereof perpendicular to the sagittal plane of the user.

In accordance with such a configuration, the exoskeleton object of the present invention provides a frame which extends on the sides, symmetrically with respect to the sagittal plane of the user, of the spine of the user and which provides rotational joints oriented according to planes perpendicular to each other.

Such a configuration allows to improve the wearability of the exoskeleton by means of a solution valid for all, i.e., a solution which satisfies a high variability of the body dimensions of the users.

The peculiar embodiment of the frame allows to obtain continuous dimensional adjustments, implementing a unique solution which can be adapted to all users.

The upper and lower rotational joints and their arrangement, implement a self-aligning mechanism for aligning the two axes of the two third actuator joints, thus allowing an automatic symmetrical positioning to compensate for any arrangement of the frame branches.

Lastly, it should be specified that the lower and upper joints are preferably passive joints, whereby they allow the natural torsion and flexion of the torso, without sacrificing the rigidity of the frame and its ability to provide high active torques by the actuation unit, in any position of the user's body.

Based on what has been described so far, it is evident that the exoskeleton object of the present invention is not limited to the presence of particular passive or active joints, but can also exclusively provide passive-actuation type joints to perform the auxiliary functions required by the user.

However, according to a preferred embodiment, the actuation unit comprises a motorized rotational joint connected to the third passive rotational joint and to the lower joint, the rotation axis of the motorized joint being arranged perpendicular with respect to the user's sagittal plane.

A combination of motorized joints and passive joints is therefore provided, in which the passive joint is connected to the waist anchoring device, while the motorized joint is connected to the passive joint.

This configuration allows a high freedom of movement of the user's trunk, as the extension/flexion of the hip is not affected by the presence of the motorized joint, as the frame can move freely, without dragging or twisting the exoskeleton components during movement.

Furthermore, as will be described later, the actuation unit is not provided at the hip joint of the user, to avoid limiting the movement of the hip itself along all possible axes, since a complete overlapping of the active joints above the hip joints prevents the abduction/adduction from being freely performed.

Advantageously, the first ball joint is connected to the upper rotational joints through a slider element configured to translate in the vertical direction.

Such a feature therefore confers a vertical sliding to the exoskeleton frame, further increasing the versatility thereof based on the body size of a user: the frame will adapt to the user's body, without the need for external aids, but automatically, through the synergistic action of the upper and lower joints and the slider element.

According to a preferred embodiment, the exoskeleton object of the present invention can be divided into two modules, a trunk module and a lower limb module.

For this reason, there is an anchoring device at the user's thigh for each frame branch, which is connected to the corresponding actuation unit through a lower frame.

Each lower frame comprises a further pair of rotational joints, of which a fourth joint and a fifth joint with the rotation axes thereof perpendicular to the front plane of the user.

Furthermore, the fourth joint is connected with a third bar to the actuation unit and with a fourth bar to the fifth joint, while the fifth joint is connected with a fifth bar to a second ball joint, in turn connected to the thigh anchoring device.

The combination of the positioning of the third passive joint, connected to the actuator, and the kinematic chain of the leg allows unprecedented freedom of movement of the lower part of the body. In fact, the leg self-alignment mechanism is designed to provide torque only on the hip flexion/extension axis.

Furthermore, the fourth and fifth joint, preferably passive, allow the lower frames to follow the movements of the users, regardless of the size and shape of the lower part of the body.

As anticipated, the waist anchoring device and the actuation units are positioned, in a worn condition, at precise points on the user's body, in particular the user's iliac crests.

Therefore, the trunk section of the exoskeleton has an optimal anchorage, which minimizes the displacement of the exoskeleton components (anchoring to the waist, torso and thighs) and does not require any misalignment compensation mechanism.

As mentioned above, the motorized joints of the exoskeleton are fixed to the two sides of the device for anchoring to the user's waist. Therefore, most of the weight of the exoskeleton is secured through such an anchoring device above the iliac crest.

Furthermore, the motorized joints are moved away from the hip joint, allowing to avoid an important negative aspect of the systems known in the background art: the exoskeleton sliding, rubbing, along the user's back.

More in particular, all the rigid exoskeletons known in the background art have been studied based on an essential requirement, i.e., the alignment of motorized joints and human joints. This specific choice is based on an overly simplified representation of end-user kinematics, which ignores the mobility of the human back when lifting loads and considers the trunk-thigh system as a rigid system. In fact, while lifting the loads, the user's lumbar spine bends and this flexion causes a kinematic misalignment between the user and the exoskeleton (a misalignment between the centre of rotation of the human system and that of the robot). The kinematic misalignment causes the development of parasitic forces, which in turn cause the exoskeleton to slide.

The exoskeleton object of the present invention solves this problem by positioning the motorized joints at the user's hips at the height of the iliac crests, thus minimizing the kinematic misalignment between man and robot.

The anchoring points on the sides, at the height of the iliac ridges, are chosen to conveniently unload the assistive forces.

Furthermore, no relative movement is developed between the device for anchoring to the pelvis and the user's body, decidedly improving comfort.

As described above, one of the peculiar features of the exoskeleton object of the present invention relates to the ease of adaptation of the frame to the different body measurements of the users.

In order to further improve such an aspect, according to an implementation variant, the waist anchoring device comprises a belt divided into two parts fixed respectively to the two actuation units, so that the two parts are configured to have a relative movement aimed at bringing the two said parts closer together/away from each other.

There is also a mechanism for adjusting such a relative movement.

Such a feature, in combination with the two frame branches with the rotational joints, allows a continuous adjustment of the exoskeleton size over a wide range of different target body sizes.

The belt and the adjustment mechanism allow the frame to easily adapt to the different dimensions of users, adjusting the opening of the frame based on the width of the users' waist. Furthermore, the belt provides reaction forces which create physical constraints to lock the passive joints of the frame, in a position suited to the body size of the user.

The belt, belonging to the exoskeleton, provides an easy, fast and intuitive solution for size adjustment.

Lastly, to make the belt design conform to the "one size fits all" approach, such a belt adapts to bodies with iliac crest circumferences from 77 to 117 centimetres (corresponding to the 5th and 95th percentile of the Caucasian population).

The purpose of the belt and the adjustment mechanism is therefore to adjust the dimensions of the exoskeleton and it is possible to make them in any manner known in the background art.

For example, it is possible to provide straps, buckles or slider elements to move the two parts of the belt away from/towards each other.

The figures attached to the present patent application will illustrate a specific embodiment of the adjustment mechanism, aimed at facilitating the use thereof in an autonomous manner by the user.

Regardless of the embodiment, according to a possible embodiment, the adjustment mechanism comprises first adjustment elements arranged in front of the user.

It is possible to provide the first means and the second means alternatively or in combination, but it is clear how it is possible to obtain infinite possibilities of adjusting the pelvis belt.

In particular, the adjustment mechanism does not only allow to move the two parts of the belt closer to/away from each other, but also to have a fine positioning adjustment of the actuation units, fixed, in fact, to the two parts of the belt.

In fact, the adjustment mechanism is essential for aligning the axis of the joints of the actuation unit perpendicular to the central axis of the user and parallel to each other.

The length and height of the belt are optimized based on the users' body shape to allow comfortable walking, bending and crouching.

As will be apparent from the illustration of an embodiment of the adjustment mechanism, said embodiment allows to obtain an easy and independent adjustment (each side of the belt can be fastened independently) and adjusts the positioning and alignment of the actuators.

Based on what has been disclosed and the specific embodiments which will be illustrated below, it is evident that the exoskeleton object of the present invention allows the complete and natural mobility of the user's hips.

In particular, the specific kinematic chain of the leg frame improves compatibility with the kinematics of the human lower limb.

The kinematic chain of the trunk module, in combination with the disclosed features, allows to obtain an exoskeleton completely adherent to the back of the user and the anchoring points, i.e., the sides of the belt and the centre of the shoulders, which do not move relative to each other with the normal movements of the user. This allows, with respect to the solutions of the background art, to design exoskeletons free of belts/straps around the buttocks, necessary to prevent the upward sliding of the frame during flexion movements.

Furthermore, the perfect grip, combined with the fixed anchoring points, avoids creating friction on the user's skin which causes shear stresses, which can lead to bruises and wounds.

Furthermore, the ability to avoid misalignment between the frame and the user's body limits the creation of unpredictable reaction forces and torques which can damage the worker and the exoskeleton.

These and other features and advantages of the present invention will become clearer from the following disclosure of some embodiment examples illustrated in the accompanying drawings in which:
figure 1 illustrates a principle diagram of the exoskeleton object of the present invention, according to a possible embodiment;
figure 2a illustrates a view of a possible embodiment of the pelvis belt belonging to the exoskeleton object of the present invention;
figure 2b illustrates a principle diagram of the operation of the pelvis belt adjustment mechanism;
figures 3a and 3b illustrate a principle diagram of the exoskeletal frames belonging to the background art;
figures 3c and 3d illustrate a principle diagram of a possible embodiment of the exoskeletal frame object of the present invention.
figures 3e to 3h illustrate the interaction between the user and the exoskeleton in accordance with the exoskeleton configurations according to figures 3a and 3b;
figures 3i to 3l illustrate the interaction between the user and the exoskeleton in accordance with the exoskeleton configurations according to figures 3c and 3d;
figures 4a and 4b illustrate a principle diagram of the lower frame belonging to the exoskeleton object of the present invention;
figures 5a to 5c illustrate some views of the belt belonging to the exoskeleton object of the present invention;
figures 6a and 6b illustrate two views of the exoskeleton object of the present invention in the worn condition.

It is specified that the figures attached to the present patent application illustrate only some possible embodiments of the exoskeleton object of the present invention, to better understand the advantages and features disclosed.

Embodiments are therefore to be understood as purely illustrative and not limiting to the inventive concept of the present invention, namely that of making a support device for the back of workers which does not require the use of components aimed at compensating the movements of the parts of the exoskeleton, which cause displacement from the ideal working position, which can be adapted to the body sizes of the different users, through simple adjustments, which the user can carry out independently and which does not limit the movement of the trunk and lower limbs of the user.

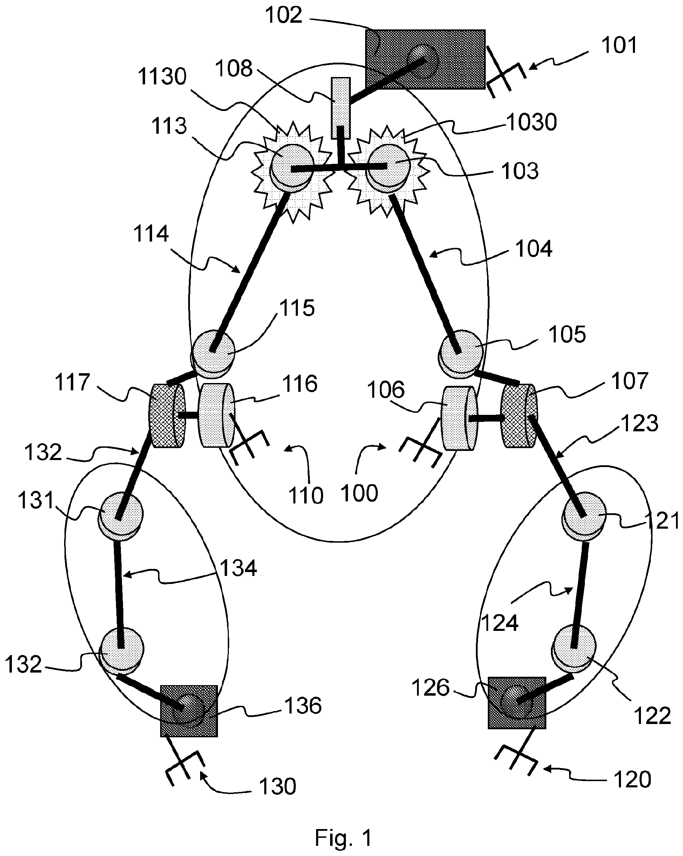

With particular reference to figure 1, the exoskeleton comprises two anchoring devices 100, 110 for anchoring to the user's waist and one anchoring device 101 for anchoring to the user's shoulders.

The shoulder anchoring device 101 is connected to a first ball joint 102 positioned at the shoulder blades of the user and connected to two frame branches, which extend laterally with respect to the user's spine and in the direction of the waist anchoring device 100, 110.

As an alternative to the ball joint 102, it is possible to provide a rotational joint arranged with the rotation axis thereof perpendicular to the sagittal plane.

Each frame branch comprises a pair of passive rotational joints, of which an upper joint 103, 113 and a lower joint 105, 115, connected to each other by a first bar 104, 114 and arranged with the rotation axes thereof perpendicular to the front plane of the user, i.e., to the plane of figure 1.

Each frame branch further comprises an actuation unit, consisting of a third passive rotational joint 106, 116 connected to the waist anchoring devices 100, 110, and a motorized rotational joint 107, 117, connected on one side to the passive joint 106, 116 and on the other side to the lower joint 105, 115.

The joints 106, 107, 116 and 117 are arranged with the rotation axes thereof perpendicular to the sagittal plane of the user, i.e., lying on the plane of figure 1, from left to right and vice versa.

Furthermore, the ball joint 102 is connected to the joints 103 and 113 through a slider element 108 configured to slide in the vertical direction, i.e., along an axis lying on the plane of figure 1, from top to bottom and vice versa.

The diagram of figure 1 further has a lower module, also consisting of two frames configured to be fixed to the legs, or rather to the thighs of the user.

In particular, each lower frame has an anchoring device to the thigh 120, 130 of the user connected to the corresponding motorized joint 107, 117, through a further pair of rotation joints, of which a fourth joint 121, 131 and a fifth joint 122, 132 with the rotation axes thereof perpendicular to the front plane of the user, i.e., to the plane of figure 1.

The fourth joint 121, 131 is connected with a third bar 123, 133 to the motorized joint 107, 117 and with a fourth bar 124, 134, to the fifth joint 122, 132, connected in turn, through a fifth rigid bar 125, 135 to a second ball joint 126, 136, fixed to the thigh anchoring device 120, 130.

As illustrated in figure 1, the exoskeleton of the present invention has a configuration in the shape of a letter "A", in which the two main branches have a relative movement.

According to the embodiment illustrated in figure 1, two toothed wheels 1030 and 1130, overlapping the upper rotational joints 103 and 113, are possible for the synchronous opening of the two branches of the upper "A"-shaped frame.

In particular, the joints 103, 105, 121, 122 of one branch and the joints 113, 115, 131, 132 of the other branch, allow a translation of mutual distancing/approach of the branches, i.e., a translation along the plane of the figure, corresponding to the front plane of the user.

With reference to figure 1 and as anticipated, the right branch has an upper part, corresponding to the trunk part of the user and a lower part, corresponding to the lower limb of the user.

The joints 106 and 107 allow the oscillation of the lower part with respect to the upper part around an axis perpendicular to the sagittal plane of the user, lying on the front plane (the plane of figure 1) and passing through the joints themselves.

It occurs in a similar manner for the left branch, whose joints 116 and 117 are aligned with the joints 106 and 107.

The particular positioning of the joints 103, 105, 121, 122, 113, 115, 131 and 132 allows to maintain the rigidity of the exoskeletal frame in the direction of the rotation between the upper part and the lower part of the frame itself.

Furthermore, such rotational joints (102, 103, 113, 105, 115, 106, 116) are necessary to maintain an optimal parallel orientation of the motorized joints 107, 117 to the sides of the user's body as the dimensions are adjusted. As a result, as the motorized joints 107, 117 are moved away from each other to adapt to a wider waist, the anchoring on the shoulders moves downward. When the exoskeleton is set to adapt to a thinner waist, the anchoring on the shoulders moves upwards. The vertical adjustment of the shoulder anchoring point is ensured by the slider 108, thanks to the trunk size compensation.

Overall, the biomechanical effect of the exoskeleton is similar to that of all other active back support devices. Therefore, the forces generated by the motorized joints 107 and 117 are transferred by means of the rigid structure to both the shoulder anchoring device 101 and the thigh anchoring device 120, 130. These forces are matched by a reaction force which is discharged onto the waist anchoring device 100, 110.

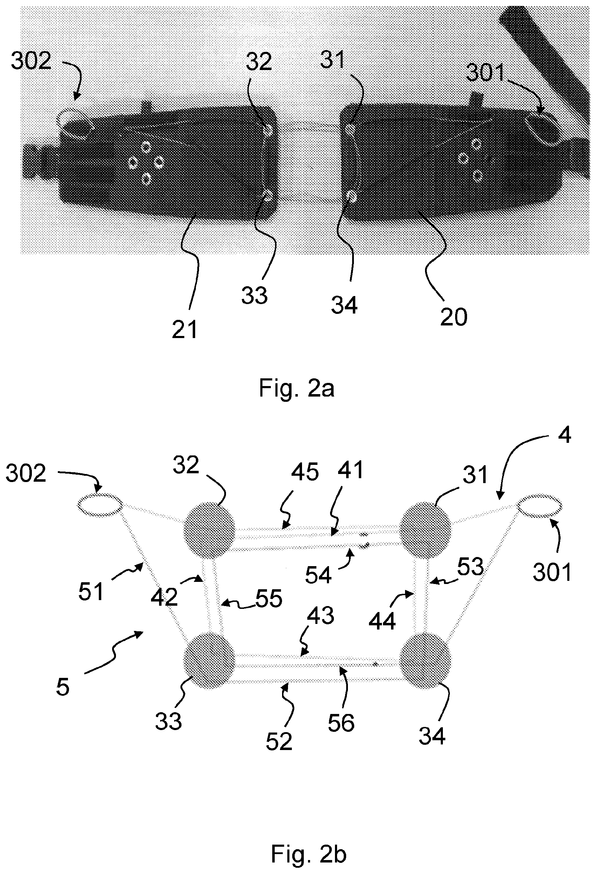

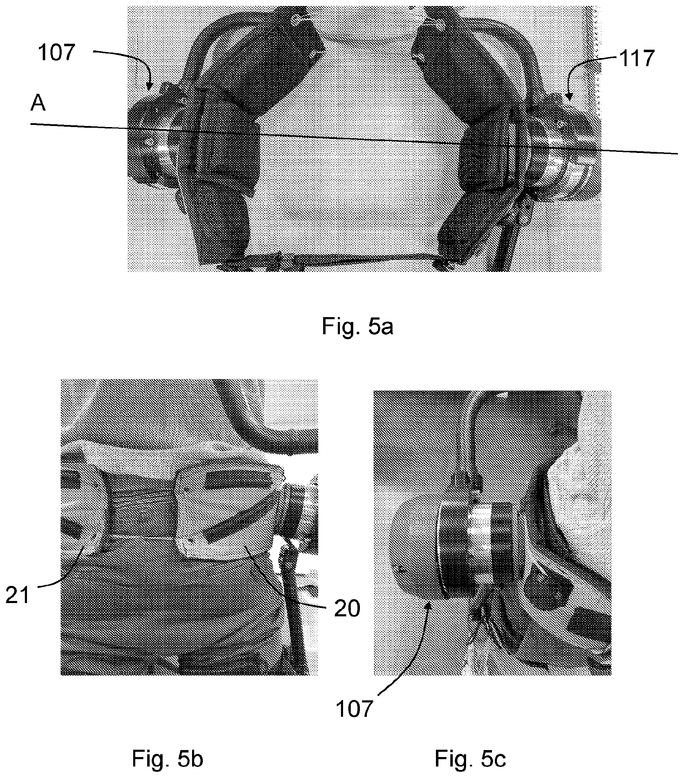

Figure 2a illustrates a view of the belt belonging to the exoskeleton object of the present invention, also illustrated in figures 5a, 5b and 5c.

The belt forms the waist anchoring device and has all the features of the belts known in the background art, such as cushioning elements to make the support on the user's back more comfortable, as well as buckles and closing snap hooks.

Advantageously, a buckle is used in the front part of the belt for a secure and easy closure. The small strap can be pulled to fix the front side of the belt. Textile materials reinforced with embedded plastic layers provide a robust structure. Furthermore, extra padding layers were used to ensure comfort on the bony parts of the pelvis.

In particular, the belt is divided into two parts 20, 21, fixed respectively to the joints 106, 116, which are configured to have a relative movement therebetween aimed at bringing the two parts 20 and 21 closer/farther apart, through a mechanism for adjusting said relative movement.

The operation of the adjustment mechanism is shown in figure 2b.

The adjustment mechanism must be easily accessible by hand when the user wears the exoskeleton, on the front side of the belt.

There are two fixed points for each part of the belt, namely 31, 32, 33, 34 around which two cables 4 and 5 are wound according to a specific pattern, so as to allow an independent lateral adjustment which improves performance and stability.

The user acts on one or both eyelets 301, 302 based on the adjustment to be made.

The pulling action on any one of the eyelets 301, 302 makes the cable slide around the fixed points 31-34 to move the two parts 20 and 21 closer together/farther apart.

The independent adjustment is allowed by the specific path of the cables 4 and 5.

In particular, the cable 4 starts from the eyelet 301, passes from the fixed points 31 and 32 through a horizontal section 41, where it bends with a vertical section 42, reaches the fixed point 33, where it bends with a further horizontal section 43 to reach the point 34.

At the level of point 34, it reaches the point 31 through a vertical section 44, where it bends with a horizontal section 45 to connect to the eyelet 302.

In a similar manner, the cable 5 starts from the eyelet 302 and passes at the level of the point 33 with a section 51, then continues with a horizontal section 52 until the point 34 where it bends with a vertical section 53 to reach the point 31.

At the level of point 31, the cable 5 continues with a horizontal section 54 towards the point 32 where it bends with a vertical section 55 towards the point 33 to continue with a horizontal section 56 towards the point 34 and connect to the eyelet 301.

This pattern is essential for positioning the motorized joints 107, 117 perfectly parallel and centred with respect to the two sides of the body.

When possible, bony parts (such as the iliac crest) are chosen to be in contact with padded and yielding parts of wearable devices, as there is little or no compression of biological soft tissues and possible movements due to tissue dynamics are absorbed.

Regardless of the adjustment mechanism of the two parts, 20 and 21, the belt belonging to the exoskeleton object of the present invention is positioned at the user's waist and envisages that the actuation unit is positioned at the user's iliac crests.

The actuation unit is formed, in the variant illustrated in the figures, by the coupling between the passive joint 106, 116 and the motorized joint 107, 117 and is positioned so that the rotation axes of said joints are parallel or coplanar to the front plane of the user, i.e., the plane indicated with the letter A in figure 5a.

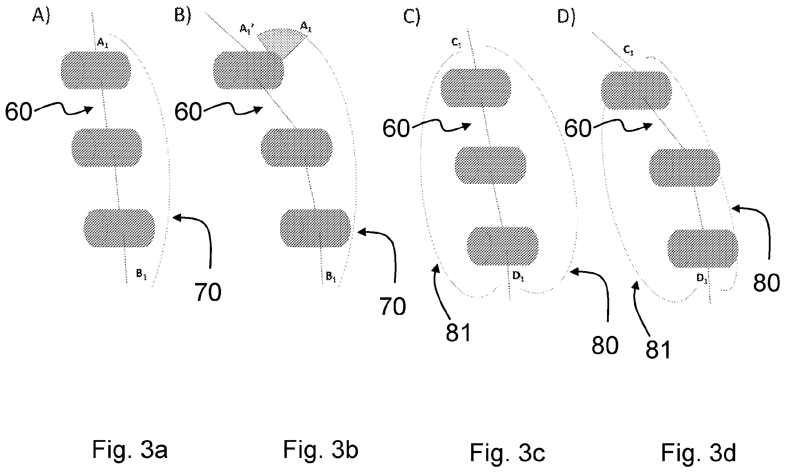

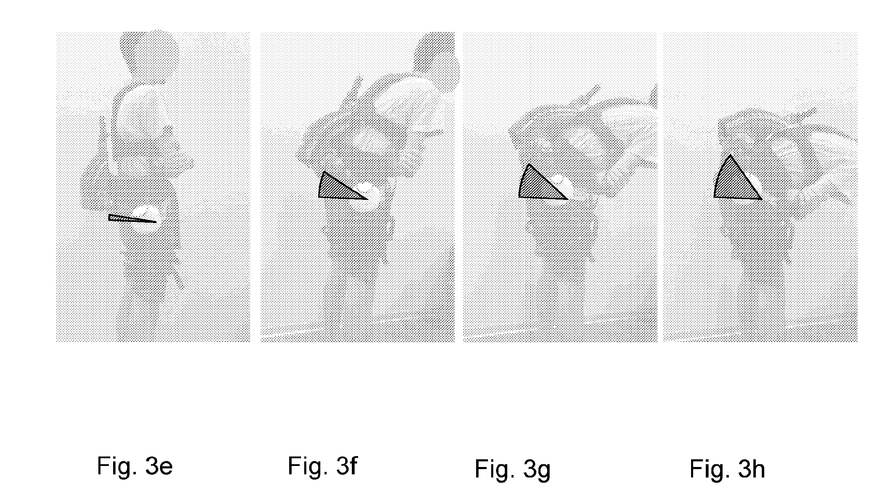

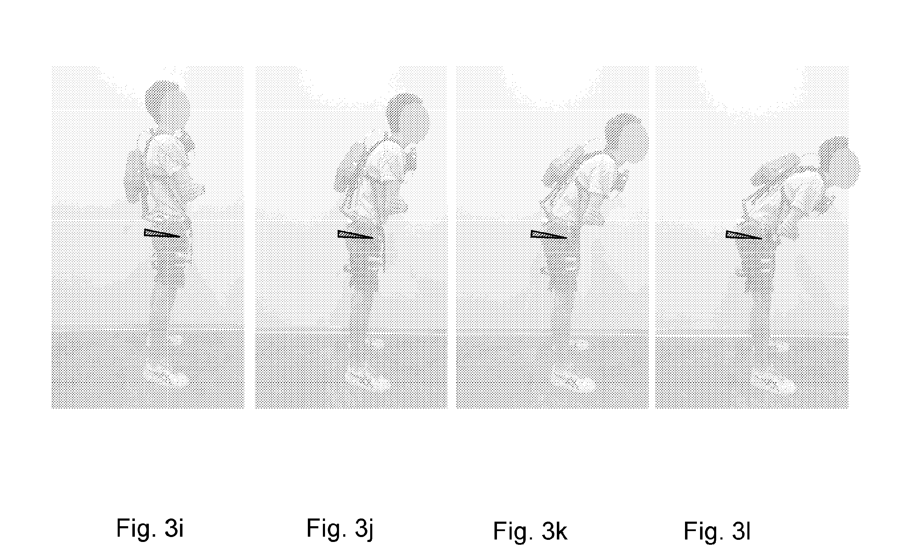

Figures 3a and 3b illustrate a principle diagram of the exoskeletal frames belonging to the background art, while figures 3c and 3d illustrate a principle diagram of a possible embodiment of the exoskeletal frame object of the present invention.

The human back consists of a highly mobile spine, illustrated in the figures with the number 60, consisting of multiple vertebrae connected by joints which allow continuous flexion in any direction in space.

When the worker's back is coupled with a parallel support structure, identified with the number 70 in figures 3a and 3b, aligned with the dorsal system, a radial or tangential displacement occurs during the movement of the joint.

Such behaviour is also illustrated in figures 3e to 3h.

The relative position of the anchoring points of the support structure 70 must move accordingly to compensate for the kinematic mismatch, as shown in figure 3b.

Figures 3c and 3d depict a parallel branched structure, as in the exoskeleton object of the present patent application, connecting the centre of the shoulders and the sides of the user at waist height.

An appropriate kinematic structure, anchored in these two points, avoids any compensatory solutions for the kinematic or motion mismatch.

As anticipated, the exoskeleton is anchored to the user's body in two invariant points placed at the height of the belt, in figure 3d such points are simplified with the anchoring point D1) for anchoring the motorized joints which, once connected to the anchoring point of the shoulder, do not migrate during the movement of the trunk by the user.

The distance from the centre of the shoulder and the anchoring points at the iliac crest does not change when the user twists and bends.

In other words, when connecting the single branch 70 parallel to the spine 80 as depicted in figure 3a, when the user bends, the anchoring point A1 moves to A1', figure 3b.

As the user moves, the frame 70 impacts against the section of the human body (in this case, the back) and this mechanical overlapping generates the migration of the anchoring point.

Differently, in figures 3c and 3d, the branches 80 and 81 are connected to two invariant points of the multi-articulated human system, points C1 and D1. During the movement, the two anchoring points do not generate mechanical interference with the body because the spine can bend inside the two branches and also, the distance between C1 and D1 does not vary.

However, each individual branch 80, 81 of the frame can be reoriented in space by the passive joints, as disclosed above.

As in the previous case, the situation described above is also illustrated in figures 3i to 3l.

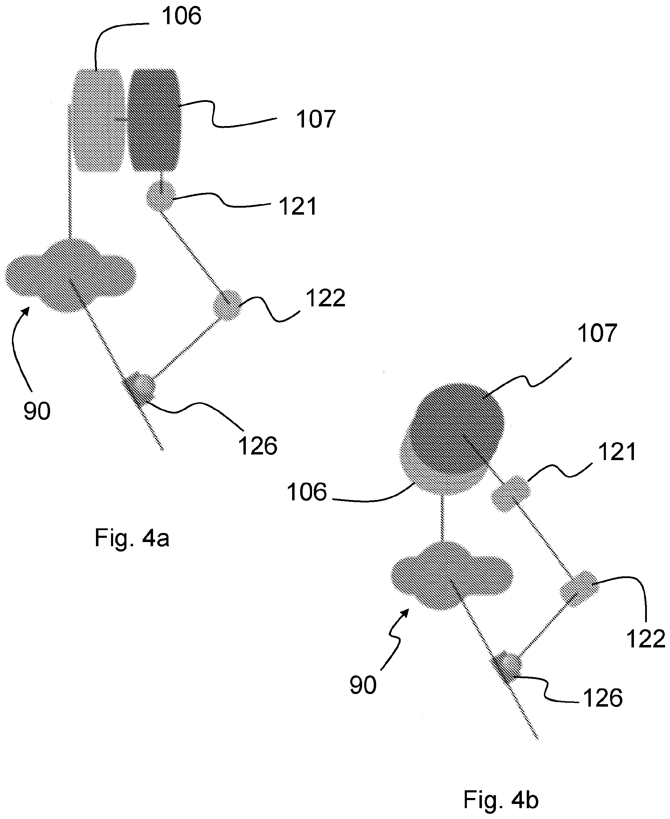

Figures 4a and 4b illustrate two views, in particular a front view and a side view, of a lower branch of the exoskeleton object of the present invention, i.e., the frame part to be fixed to the thigh of the user, around the hip joint.

As described above, the presence of the passive joints 106, 121, 122 allows freedom of movement in the transverse and frontal plane of the leg.

Figures 4a and 4b show the complex kinematics of the coupling of the human leg and the structure of the exoskeleton. The entire system, the human hip 90 and the exoskeleton leg structure, consists of an 8-bar connection, three of which are part of the human joint. The hip joint is simplified and depicted with two degrees of freedom of movement, flexion/extension and adduction/abduction.

The chain of the leg of the exoskeleton consists of five rigid bodies, three degrees of freedom on the sagittal plane and another three degrees of freedom on the frontal plane.

The principle diagrams of figures 4a and 4b show the two main degrees of freedom of the hip and how the kinematic chain of the exoskeleton compensates for joint mobility along the sagittal and frontal planes.

In particular, figure 4a shows how the passive joints 121, 122 compensate for the abduction/adduction movement of the hip 90, while figure 4b shows how the motorized joint 107 compensates for the flexion/extension of the hip 90.

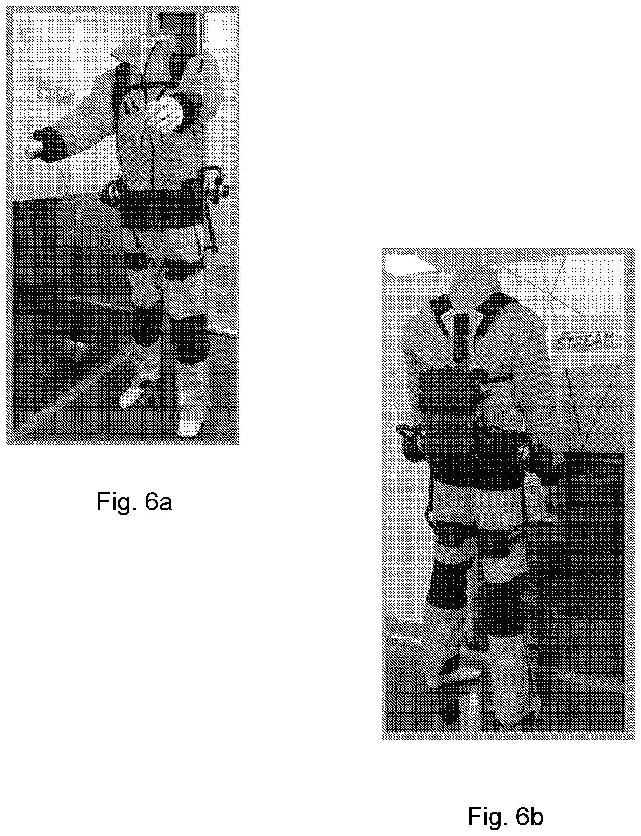

Lastly, figures 6a and 6b illustrate a possible embodiment of the exoskeleton object of the present invention in the condition worn by the user.

With regard to the construction parts and materials, the exoskeleton object of the present invention can use the components known in the background art.

In particular, the frame consists of a tubular aluminium frame which is anchored to the human body by means of several attachments.

The accessories consist of rucksack-like shoulder straps, waist belt and thigh straps. The motorized hip joints (one on each side of the body) generate an assistive torque on the sagittal plane (up to 70 Nm of continuous torque) by discharging the assistive forces on the torso and thighs, pivoting on the waist. The motorized joints support the extension/flexion of the hip along the sagittal plane.

The thigh straps are only used to adjust the distance from the waist to the anchoring point of the thigh and prevent the thigh strap from moving downwards. The ergonomic position of the belt on the body, combined with the design of the kinematic chain, allow the exoskeleton to be firmly fixed to the user in any position.

The prototype of the exoskeleton object of the present invention weighs about 6.2 kg. Each motorized joint consists of a reduced electric motor controlled according to a measurement of the torque generated.

The electronics and battery are connected on the rear side of the exoskeleton structure, as illustrated in figure 6b, including a plug and play system for easy replacement of the battery pack. The human-machine interface (HMI) is wired and anchored by means of a tear-off/magnetic strap to the shoulder straps on one side of the user's chest and the electrical cable is connected to the main box by means of a safety connector. The HMI includes the emergency button.

While the invention is subject to various modifications and alternative constructions, some preferred embodiments have been shown in the drawings and described in detail.

It should be understood, however, that there is no intention to limit the invention to the specific illustrated embodiment but, on the contrary, the aim is to cover all the modifications, alternative constructions and equivalents falling within the scope of the invention as defined in the claims.

The use of "for example", "etc." or "or" refers to non-exclusive nonlimiting alternatives, unless otherwise stated.

The use of "includes" means "includes but is not limited to", unless otherwise stated.

The project from which the present patent application derives has received funding from the Shift2Rail Joint Undertaking (JU) under the EU research and innovation programme Horizon 2020 with the Grant Agreement No. 101015418.

## Claims

1. Exoskeleton configured to be worn by a user, comprising a waist anchoring device (100, 110) for anchoring to the user's waist, a torso anchoring device (101) for anchoring to the user's torso, and a thigh anchoring device for anchoring to the user's thigh, the waist anchoring device (100, 110) being connected to the torso anchoring device (101) through an upper frame and to the thigh anchoring device of the user through a lower frame,
there being two actuation units configured to generate an assistive torque and positioned at the height of the user's waist,
said exoskeleton comprising two frame branches extend laterally with respect to the user's spine and in the direction of the waist anchoring device (100, 110),
each branch comprising a pair of rotational joints, of which an upper joint (103, 113) and a lower joint (105, 115), connected to each other by a first rigid bar (104) and arranged with the rotation axes thereof perpendicular to the front plane of the user and an actuation unit connected with a second rigid bar to the lower rotational joint (105, 115),
which actuation unit comprises at least a third rotational joint (106, 116) connected to the waist anchoring device (100, 110) and arranged with the rotation axis thereof perpendicular to the sagittal plane of the user
**characterized in that**
said upper frame comprises a first ball joint (102) positioned at the user's shoulders and connected to said two frame branches.

2. Exoskeleton according to claim 1, wherein the two actuation units are positioned, in a worn condition, at the user's sides, at the height of the iliac crests.

3. Exoskeleton according to one or more of the preceding claims, wherein said actuation unit comprises a motorized rotational joint (107, 117) connected to said third rotational joint (106, 116) and with the lower joint (105, 115), the rotation axis of the motorized joint (107, 117) being arranged perpendicularly with respect to the sagittal plane of the user and the third joint (106, 116) being passive.

4. Exoskeleton according to one or more of the preceding claims, wherein said first ball joint (102) is connected to the upper rotational joints (103, 113) through a slider element (108) configured to translate in the vertical direction.

5. Exoskeleton according to one or more of the preceding claims, wherein said lower frame comprises a lower branch for each leg, each lower branch comprising a further pair of rotation joints, of which a fourth joint (121, 131) and a fifth joint (122, 132) with the rotation axes thereof perpendicular to the front plane of the user,
the fourth joint (121, 131) being connected with a third rigid bar (123, 133) to the actuation unit and with a fourth rigid bar (124, 134) to the fifth joint (121, 131) and the fifth joint (121, 131) being connected with a fifth rigid bar to a second ball joint (126, 136), which in turn is connected to the thigh anchoring device (120, 130).

6. Exoskeleton according to one or more of the preceding claims, wherein said waist anchoring device (100, 110) comprises a belt divided into two parts (20, 21) fixed respectively to the two actuation units, the two parts (20, 21) being configured to have a mutual relative movement aimed at approaching/distancing the two said parts (20, 21), there being a mechanism for adjusting said relative movement.

7. Exoskeleton according to claim 6, wherein said adjustment mechanism comprises first adjustment elements arranged frontally of the user.

8. Exoskeleton according to one or more of the preceding claims, wherein the anchoring points (120, 130) to the user's thighs comprise straps adjustable in length, configured to surround the thigh and to adjust the distance between the waist anchoring points and the thigh anchoring points.

9. Exoskeleton according to one or more of the preceding claims, wherein there is at least one power supply unit and an electronic control unit, which units are fixed to the anchoring device (101) to the user's torso.

## Patentansprüche

1. Exoskelett, das zum Tragen durch einen Benutzer ausgelegt ist, mit einer Taillenverankerungsvorrichtung (100, 110) zur Verankerung an der Taille des Benutzers, einer Rumpfverankerungsvorrichtung (101) zur Verankerung am Rumpf des Benutzers, sowie eine Oberschenkelverankerung zur Verankerung am Oberschenkel des Benutzers, wobei die Taillenverankerung (100, 110) über einen oberen Rahmen mit der Rumpfverankerung (101) und über einen unteren Rahmen mit der Oberschenkelverankerung des Benutzers verbunden ist,
wobei zwei Betätigungseinheiten vorhanden sind, die zur Erzeugung eines unterstützenden Drehmoments ausgelegt und auf Höhe der Taille des Benutzers angeordnet sind,
wobei das Exoskelett zwei Rahmenschenkel umfasst, die sich seitlich zur Wirbelsäule des Benutzers und in Richtung der Taillenverankerungseinrichtung (100, 110) erstrecken,
wobei jeder Schenkel ein Paar Drehgelenke umfasst, nämlich ein oberes Gelenk (103, 113) und ein unteres Gelenk (105, 115), die durch eine erste starre Stange (104) miteinander verbunden sind und deren Drehachsen senkrecht zur Vorderebene des Benutzers ausgerichtet sind, sowie eine Betätigungseinheit, die über eine zweite starre Stange mit dem unteren Drehgelenk (105, 115) verbunden ist ,
wobei die Betätigungseinheit mindestens ein drittes Drehgelenk (106, 116) umfasst, das mit der Taillenverankerungseinrichtung (100, 110) verbunden ist und dessen Drehachse senkrecht zur Sagittalebene des Benutzers ausgerichtet ist,
**dadurch gekennzeichnet, dass**
der obere Rahmen ein erstes Kugelgelenk (102) umfasst, das an den Schultern des Benutzers positioniert und mit den beiden Rahmenschenkeln verbunden ist.

2. Exoskelett nach Anspruch 1, wobei die beiden Antriebseinheiten im getragenen Zustand an den Seiten des Benutzers in Höhe der Beckenkämme positioniert sind.

3. Exoskelett nach einem oder mehreren der vorstehenden Ansprüche, wobei die Antriebseinheit ein motorisiertes Drehgelenk (107, 117) umfasst, das mit dem dritten Drehgelenk (106, 116) und mit dem unteren Gelenk (105, 115) verbunden ist, wobei die Drehachse des motorisierten Gelenks (107, 117) senkrecht zur Sagittalebene des Benutzers angeordnet ist und das dritte Gelenk (106, 116) passiv ist.

4. Exoskelett nach einem oder mehreren der vorstehenden Ansprüche, wobei das erste Kugelgelenk (102) über ein Gleitelement (108), das so ausgebildet ist, dass es sich in vertikaler Richtung verschiebt, mit den oberen Drehgelenken (103, 113) verbunden ist.

5. Exoskelett nach einem oder mehreren der vorstehenden Ansprüche, wobei der untere Rahmen einen unteren Schenkel für jedes Bein umfasst, wobei jeder untere Schenkel ein weiteres Paar von Drehgelenken umfasst, von denen ein viertes Gelenk (121, 131) und ein fünftes Gelenk (122, 132) mit senkrecht zur Vorderebene des Benutzers verlaufenden Drehachsen,
wobei das vierte Gelenk (121, 131) über eine dritte starre Stange (123, 133) mit der Antriebseinheit und über eine vierte starre Stange (124, 134) mit dem fünften Gelenk (121, 131) verbunden ist und das fünfte Gelenk (121, 131) über eine fünfte starre Stange mit einem zweiten Kugelgelenk (126, 136) verbunden ist, das wiederum mit der Oberschenkelverankerung (120, 130) verbunden ist.

6. Exoskelett nach einem oder mehreren der vorstehenden Ansprüche, wobei die Taillenverankerungsvorrichtung (100, 110) einen in zwei Teile (20, 21) unterteilten Gurt umfasst, die jeweils an den beiden Antriebseinheiten befestigt sind, wobei die beiden Teile (20, 21) so ausgebildet sind, dass sie eine gegenseitige Relativbewegung ausführen können, die darauf abzielt, die beiden Teile (20, 21) einander anzunähern bzw. voneinander zu entfernen, wobei ein Mechanismus zum Einstellen dieser Relativbewegung vorhanden ist.

7. Exoskelett nach Anspruch 6, wobei der Einstellmechanismus erste Einstellelemente umfasst, die vor dem Benutzer angeordnet sind.

8. Exoskelett nach einem oder mehreren der vorstehenden Ansprüche, wobei die Befestigungspunkte (120, 130) an den Oberschenkeln des Benutzers längenverstellbare Gurte umfassen, die so ausgebildet sind, dass sie den Oberschenkel umschließen und den Abstand zwischen den Befestigungspunkten an der Taille und den Befestigungspunkten an den Oberschenkeln einstellen.

9. Exoskelett nach einem oder mehreren der vorstehenden Ansprüche, wobei mindestens eine Stromversorgungseinheit und eine elektronische Steuereinheit vorhanden sind, die an der Verankerungsvorrichtung (101) am Oberkörper des Benutzers befestigt sind.

## Revendications

1. Exosquelette configuré pour être porté par un utilisateur, comprenant un dispositif d'ancrage à la taille (100, 110) destiné à être fixé à la taille de l'utilisateur, un dispositif d'ancrage au torse (101) destiné à être fixé au torse de l'utilisateur, et un dispositif d'ancrage à la cuisse destiné à être fixé à la cuisse de l'utilisateur, le dispositif d'ancrage à la taille (100, 110) étant relié au dispositif d'ancrage au torse (101) par l'intermédiaire d'un châssis supérieur et au dispositif d'ancrage à la cuisse de l'utilisateur par l'intermédiaire d'un châssis inférieur,
il y a deux unités d'actionnement configurées pour générer un couple d'assistance et positionnées à la hauteur de la taille de l'utilisateur,
ledit exosquelette comprenant deux branches de châssis s'étendant latéralement par rapport à la colonne vertébrale de l'utilisateur et dans la direction du dispositif d'ancrage à la taille (100, 110),
chaque branche comprenant une paire d'articulations rotatives, dont une articulation supérieure (103, 113) et une articulation inférieure (105, 115), reliées l'une à l'autre par une première barre rigide (104) et disposées de telle sorte que leurs axes de rotation soient perpendiculaires au plan frontal de l'utilisateur, ainsi qu'une unité d'actionnement reliée par une deuxième barre rigide à l'articulation rotative inférieure (105, 115),
cette unité d'actionnement comprenant au moins une troisième articulation rotative (106, 116) reliée au dispositif d'ancrage à la taille (100, 110) et dont l'axe de rotation est perpendiculaire au plan sagittal de l'utilisateur,
**caractérisé en ce que**
ledit châssis supérieur comprend une première articulation à rotule (102) positionnée au niveau des épaules de l'utilisateur et reliée auxdites deux branches du châssis.

2. Exosquelette selon la revendication 1, dans lequel les deux unités d'actionnement sont positionnées, à l'état porté, sur les côtés de l'utilisateur, à la hauteur des crêtes iliaques.

3. Exosquelette selon une ou plusieurs des revendications précédentes, dans lequel ladite unité d'actionnement comprend une articulation rotative motorisée (107, 117) reliée à ladite troisième articulation rotative (106, 116) et à l'articulation inférieure (105, 115), l'axe de rotation de l'articulation motorisée (107, 117) étant disposé perpendiculairement au plan sagittal de l'utilisateur et la troisième articulation (106, 116) étant passive.

4. Exosquelette selon l'une ou plusieurs des revendications précédentes, dans lequel ladite première articulation à bille (102) est reliée aux articulations rotatives supérieures (103, 113) par l'intermédiaire d'un élément coulissant (108) configuré pour se déplacer en translation dans la direction verticale.

5. Exosquelette selon une ou plusieurs des revendications précédentes, dans lequel ledit châssis inférieur comprend une branche inférieure pour chaque jambe, chaque branche inférieure comprenant une autre paire d'articulations rotatives, dont une quatrième articulation (121, 131) et une cinquième articulation (122, 132) dont les axes de rotation sont perpendiculaires au plan frontal de l'utilisateur,
la quatrième articulation (121, 131) étant reliée par une troisième barre rigide (123, 133) à l'unité d'actionnement et par une quatrième barre rigide (124, 134) à la cinquième articulation (121, 131), et la cinquième articulation (121, 131) étant reliée par une cinquième barre rigide à une deuxième articulation à rotule (126, 136), qui est elle-même reliée au dispositif d'ancrage à la cuisse (120, 130).

6. Exosquelette selon une ou plusieurs des revendications précédentes, dans lequel ledit dispositif d'ancrage à la taille (100, 110) comprend une ceinture divisée en deux parties (20, 21) fixées respectivement aux deux unités d'actionnement, les deux parties (20, 21) étant configurées pour présenter un mouvement relatif mutuel visant à rapprocher ou à éloigner lesdites deux parties (20, 21), un mécanisme étant prévu pour régler ledit mouvement relatif.

7. Exosquelette selon la revendication 6, dans lequel ledit mécanisme de réglage comprend des premiers éléments de réglage disposés en face de l'utilisateur.

8. Exosquelette selon une ou plusieurs des revendications précédentes, dans lequel les points d'ancrage (120, 130) sur les cuisses de l'utilisateur comprennent des sangles réglables en longueur, agencées pour entourer la cuisse et pour ajuster la distance entre les points d'ancrage au niveau de la taille et les points d'ancrage au niveau des cuisses.

9. Exosquelette selon une ou plusieurs des revendications précédentes, dans lequel il existe au moins une unité d'alimentation électrique et une unité de commande électronique, lesquelles unités sont fixées au dispositif d'ancrage (101) sur le torse de l'utilisateur.
